# EUROPEAN PATENT APPLICATION

(11) **EP 4 722 599 A1**
(43) Date of publication of application: **08.04.2026**
(21) Application number: 25186138.1
(22) Date of filing: 30.06.2025
(51) Int. Cl.: F24C 7/08, F24C 15/00, F24C 15/32, H05B 6/64

(54) **AN OVEN COMPRISING A TRANSDUCER**

(30) Priority: 02.10.2024 TR 2024013231
(71) Applicant: Arçelik Anonim Sirketi, 34445 Istanbul (TR)
(72) Inventor: BICER, Emrah, 34445 Istanbul (TR); ONER, Levent, 34445 Istanbul (TR); AYTAN, Onur, 34445 Istanbul (TR); CELIK, Aziz, 34445 Istanbul (TR); OZDAMAR, Emre, 34445 Istanbul (TR)

(57) **Abstract**

The present invention relates to an oven (1) comprising a cooking chamber (4) which is defined by an upper wall (2), a lower wall and side walls (3), and a casing (5) which surrounds the cooking chamber (4); at least one transducer (6) which is positioned at any location on the casing (5) so as to extend from the casing (5) toward the outside of the oven (1); at least one vibration member (7) which is connected to the transducer (6), which faces from the casing (5) toward the cooking chamber (4) and which guides the vibration emitted from the transducer (6) toward the cooking chamber (4) in a focused manner by suppressing the hot air; and at least one connection member (8) which enables the vibration member (7) and the transducer (6) to be fixed.

## Description

### Technical Field

The present invention relates to an oven which ensures that the foodstuffs are softened and preserve their moisture content by using ultrasonic transducer technology in cooking processes.

### State of the Art

One of the major problems encountered in the state of the art ovens during the cooking of meat and other foodstuffs is the hardening of the meat and the lack of moisture in the foodstuff as a result of the cooking process. Direct cooking processes performed in the oven may lead to the drying of the foodstuffs and a loss of flavor. Particularly in long-duration cooking processes, preserving the flavor and tenderness of the cooked meat creates a significant challenge.

Although various methods have been developed as a solution to the said problem, the proper management of hot air and steam in the oven and maintaining the desired moisture level on the surface of the foodstuff is still an ongoing issue. Another technical problem is the possibility of damage to the oven casing and enamel coating due to high vibration during the mounting of ultrasonic vibration-emitting members in the oven.

In this context, the effective direction of steam and hot air onto the foodstuff with vibration in the oven and the transmission of such vibrations so as not to damage the oven structure emerge as an important problem. However, no known solution or document disclosed in the state of the art which addresses this problem has been encountered.

Currently, there is a need for improvement regarding the effective and safe integration of ultrasonic vibration-emitting members into the oven, the material selection for the vibration transmitting members to be used in the oven and how to ensure that such materials transmit the vibrations in the most efficient manner.

### Brief Description of the Invention

The aim of the present invention is the realization of an oven which ensures that the cooked foodstuff remains tender and marinated by enabling vibration waves to guide the steam in the oven directly onto the foodstuff and retaining the steam on the foodstuff for a long period instead of circulating the same steam in the oven and discharging the same through the ventilation duct.

Another aim of the present invention is the realization of an oven wherein the steam and hot air are concentrated in a specific area in the oven, particularly above the foodstuff, through vibration.

Yet another aim of the present invention is the realization of an oven wherein the transducer is positioned so as not to block the transmission of vibrations and so as to prevent damage to the casing and oven surfaces.

The said figures are:

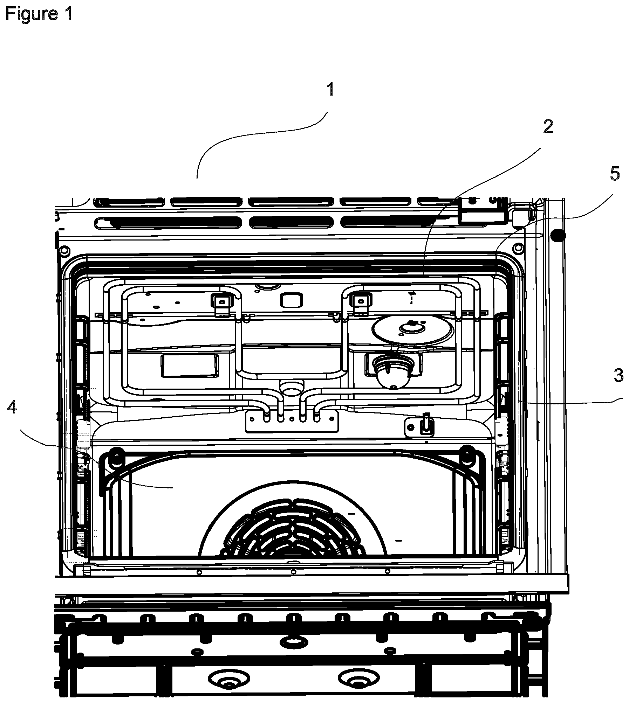

**Figure 1****:** is the front perspective view of the oven of the present invention.

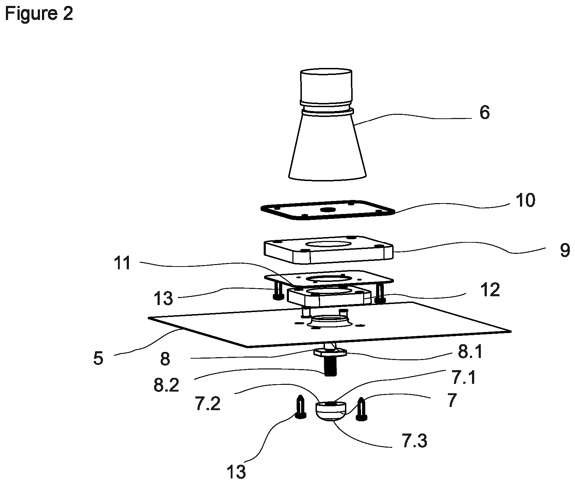

**Figure 2****:** is the exploded view of the transducer and the vibration member of the oven of the present invention.

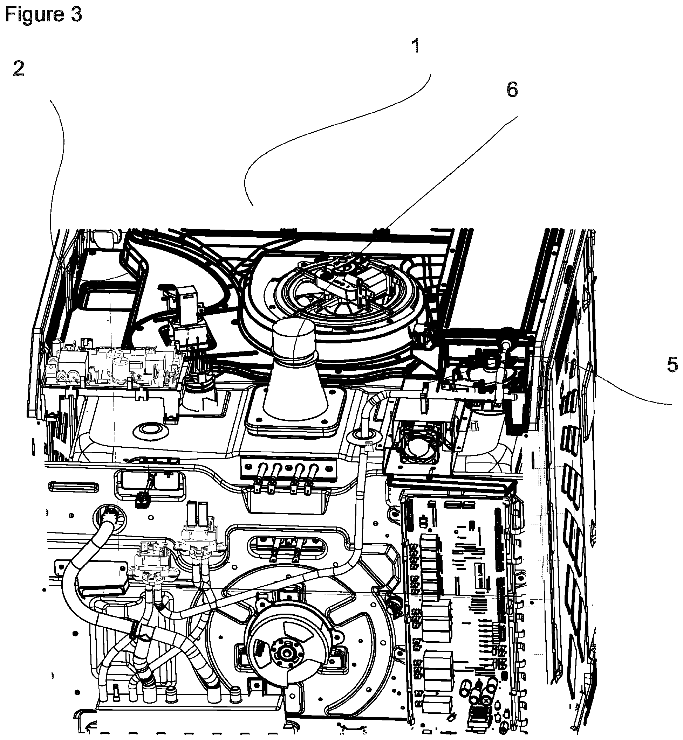

**Figure 3****:** is the rear top perspective view of the oven of the present invention.

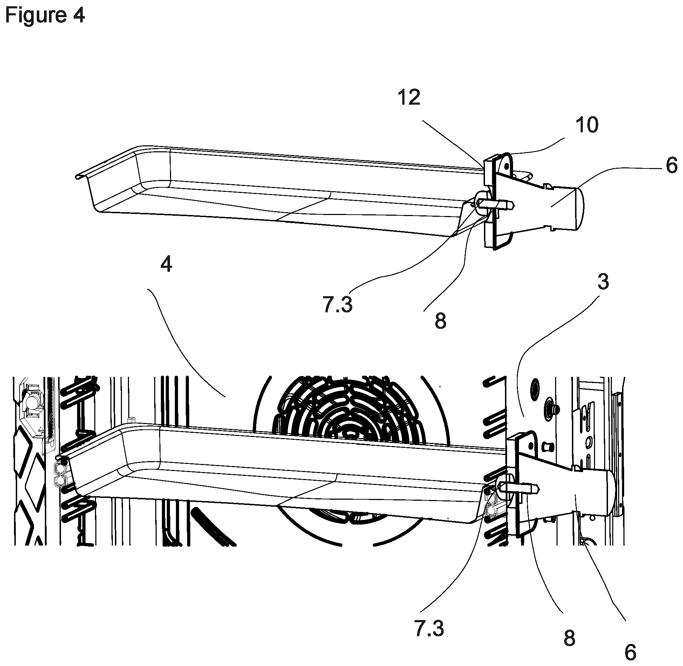

**Figure 4****:** is the perspective view of the positioning of the transducer and the vibration member of the present invention.

The following numerals are referred to in the description of the present invention:
1. Oven
2. Upper wall
3. Side wall
4. Cooking chamber
5. Casing
6. Transducer
   6.1 Cavity
7. Vibration member
   7.1 Housing
   7.2 First surface
   7.3 Second surface
8. Connection member
   8.1 An end portion
   8.2 Another end portion
9. Dampening member
10. First layer
11. Second layer
12. Second dampening member
13. Connection part
14. Cooking member

### Detailed Description of the Invention

The oven (1) of the present invention comprises a cooking chamber (4) which is defined by an upper wall (2), a lower wall and side walls (3), and a casing (5) which surrounds the cooking chamber (4).

The oven (1) of the present invention comprises at least one transducer (6) which is positioned at any location on the casing (5) so as to extend from the casing (5) toward the outside of the oven (1); at least one vibration member (7) which is connected to the transducer (6), which faces from the casing (5) toward the cooking chamber (4) and which guides the vibration emitted from the transducer (6) toward the cooking chamber (4) in a focused manner by suppressing the hot air; and at least one connection member (8) which enables the vibration member (7) and the transducer (6) to be fixed. The vibration emitted from the transducer (6) ensures that the foodstuff, generally meat, cooked in the cooking chamber (4) is soft and marinated. Thus, by means of the vibration, the steam and hot air circulating in the cooking chamber (4) are enabled to concentrate in a specific area, particularly above the foodstuff.

Moreover, enzymes and proteins in the cooked foodstuff act as bioreceptors and perform chemical reactions with analytes. During such reactions, biochemical signals are converted into electrical signals by means of the transducer, and the reaction is accelerated. Thus, the catalytic properties of the enzymes enhance the effectiveness in biosensors. In the presence of enzymes, the reaction takes place more rapidly and efficiently.

In an embodiment of the present invention, the vibration member (7) comprises a housing (7.1) which receives an end portion (8.1) of the connection member (8), a first surface (7.2) which receives the vibration emitted from the transducer (6), and a second surface (7.3) which extends from the casing (5) toward the cooking chamber (4) and which transmits the vibration received from the transducer (6) to the cooking chamber (4) so as to ensure the focused delivery of the hot air. In an embodiment of the present invention, the vibration member (7) is in the form of a cylinder which enables the suppression of the hot air. Another end portion (8.2) of the connection member (8) is fitted into a cavity (6.1) provided on the surface of the transducers (6) facing the casing (5). Thus, the connection between the vibration member (7) and the transducer (6) is provided.

In an embodiment of the present invention, the oven (1) comprises at least one damping member (9) which is provided between the casing (5) and the transducer (6) so as to prevent vibration and noise which may occur in the casing (5), and at least one first layer (10) which enables the transducer (6) to be fixed to the damping member (9) by means of at least one connection part (13).

In an embodiment of the present invention, the oven (1) further comprises a second damping member (12) which is provided between the casing (5) and the damping member (9) so as to prevent vibration and noise which may occur in the casing (5), and at least one second layer (11) which enables the damping member (9) to be fixed to the second damping member (12) by means of at least one connection part (13).

In an embodiment of the present invention, the vibration member (7), the casing (5), the second damping member (12), the second layer (11), the damping member (9), the first layer (10) and the transducer (6) are fixed to one another by means of a connection member (8). In an embodiment of the present invention, the connection member (8) is a shaft.

In an embodiment of the present invention, the oven (1) comprises a vibration member (7) which is positioned between the upper wall (2) and the casing (5) such that one second surface (7.3) thereof faces the cooking chamber (4). Thus, the vibration transmitted from the transducer (6) is delivered in a focused manner from the upper part of the cooking chamber (4) onto the foodstuff by means of the vibration member (7).

In another embodiment of the present invention, the oven (1) comprises at least one vibration member (7) which is positioned between at least one of the side walls (3) and the casing (5) such that one second surface (7.3) thereof faces the cooking chamber (4). Thus, the vibration transmitted from the transducer (6) is delivered in a focused manner onto the foodstuff from the right and/or left side portions of the cooking chamber (4) by means of the vibration member (7). In an embodiment of the present invention, at least one vibration member (7) is positioned so as to at least partially contact at least one cooking member (14) provided in the cooking chamber (4). Thus, the vibration emitted from the transducer (6) is directly transmitted to the foodstuff by means of the cooking member (14).

## Claims

1. An oven (1) **comprising** a cooking chamber (4) which is defined by an upper wall (2), a lower wall and side walls (3), and a casing (5) which surrounds the cooking chamber (4), **characterized by** at least one transducer (6) which is positioned at any location on the casing (5) so as to extend from the casing (5) toward the outside of the oven (1); at least one vibration member (7) which is connected to the transducer (6), which faces from the casing (5) toward the cooking chamber (4) and which guides the vibration emitted from the transducer (6) toward the cooking chamber (4) in a focused manner by suppressing the hot air; and at least one connection member (8) which enables the vibration member (7) and the transducer (6) to be fixed.

2. An oven (1) as in Claim 1, **characterized by** the vibration member (7) comprising a housing (7.1) which receives an end portion (8.1) of the connection member (8), a first surface (7.2) which receives the vibration emitted from the transducer (6), and a second surface (7.3) which extends from the casing (5) toward the cooking chamber (4) and which transmits the vibration received from the transducer (6) to the cooking chamber (4) so as to ensure the focused delivery of the hot air.

3. An oven (1) as in Claim 1 or 2, **characterized by** a vibration member (7) in the form of a cylinder which is configured to suppress the hot air so as to ensure the focused delivery thereof.

4. An oven (1) as in any one of the above claims, **characterized by** a transducer (6) comprising a cavity (6.1) which is provided on the surface thereof facing the casing (5) so as to ensure the connection of the transducer (6) with the vibration member (7) and which receives another end portion (8.2) of the connection member (8).

5. An oven (1) as in any one of the above claims, **characterized by** at least one damping member (9) which is provided between the casing (5) and the transducer (6) and at least one first layer (10) which enables the transducer (6) to be fixed to the damping member (9) by means of at least one connection part (13).

6. An oven (1) as in any one of the above claims, **characterized by** a second damping member (12) which is provided between the casing (5) and the damping member (9) and at least one second layer (11) which enables the damping member (9) to be fixed to the second damping member (12) by means of at least one connection part (13).

7. An oven (1) as in any one of the above claims, **characterized by** a connection member (8) which ensures that the vibration member (7), the casing (5), the second damping member (12), the second layer (11), the damping member (9), the first layer (10) and the transducer (6) are fixed to one another.

8. An oven (1) as in any one of the above claims, **characterized by** a vibration member (7) which is positioned between the upper wall (2) and the casing (5) such that one second surface (7.3) thereof faces the cooking chamber (4).

9. An oven (1) as in any one of the above claims, **characterized by** at least one vibration member (7) which is positioned between at least one of the side walls (3) and the casing (5) such that one second surface (7.3) thereof faces the cooking chamber (4).

10. An oven (1) as in Claim 9, **characterized by** at least one vibration member (7) which is positioned so as to at least partially contact at least one cooking member (14) provided in the cooking chamber (4).
